# EUROPEAN PATENT APPLICATION

(11) **EP 4 622 388 A1**
(43) Date of publication of application: **24.09.2025**
(21) Application number: 23896554.5
(22) Date of filing: 16.11.2023
(51) Int. Cl.: H04W 76/40

(54) **COMMUNICATION METHOD AND APPARATUS**

(30) Priority: 30.11.2022 CN 202211528507
(71) Applicant: Huawei Technologies Co., Ltd., Shenzhen, Guangdong 518129 (CN)
(72) Inventor: ZHANG, Qian, Shenzhen, Guangdong 518129 (CN); LIN, Yongbiao, Shenzhen, Guangdong 518129 (CN); ZHOU, Xubo, Shenzhen, Guangdong 518129 (CN); SHU, Difei, Shenzhen, Guangdong 518129 (CN)
(74) Representative: Maiwald GmbH
(86) International application number: PCT/CN2023/132160
(87) International publication number: WO 2024/114402

(57) **Abstract**

This application pertains to the field of communication technologies, and provides a communication method and apparatus, to improve reliability of a broadcast/multicast session and improve service stability and continuity. In the method, when an application server, for example, a first application server, needs to establish a multicast session, the application server can occupy a quantity of multicast sessions allocated by a core network element to the first application server, and establish the multicast session, but cannot occupy a quantity of multicast sessions allocated by the core network element to another application server, and establish the multicast session. In this way, each application server can establish a multicast session within an allowed range of a quantity of multicast sessions allocated by the core network element to the application server, to avoid a case in which a multicast session of another server is interrupted or disrupted because the first application server preempts a quantity of multicast sessions of the another server when establishing a multicast session. This improves reliability of a broadcast/multicast session and improves service stability and continuity.

## Description

This application claims priority to Chinese Patent Application No. 202211528507.5, filed with the China National Intellectual Property Administration on November 30, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Multimedia broadcast/multicast service (multimedia broadcast/multicast service, MBMS) is a technology defined by the 3rd generation partnership project (3rd generation partnership project, 3GPP) for carrying a multicast/broadcast service and a unicast service on a mobile cellular network. In the technology, an application server (application server, AS) may establish a broadcast/multicast session based on a service priority.

However, the broadcast/multicast session established based on the service priority has poor reliability, and consequently, service stability and continuity are affected.

### SUMMARY

Embodiments of this application provide a communication method and apparatus, to improve reliability of a broadcast/multicast session and improve service stability and continuity.

To achieve the foregoing objective, the following technical solutions are used in this application.

According to a first aspect, a communication method is provided. The method includes: A core network element receives a first request message from a first application server. If a quantity of unoccupied multicast sessions in a quantity of dedicated multicast sessions of the first application server is greater than or equal to a quantity of multicast sessions that the first request message requests to establish, based on the first request message, the core network element occupies the quantity of unoccupied multicast sessions, and establishes a first multicast session for the first application server. The first request message is for requesting to establish a multicast session for the first application server. The quantity of dedicated multicast sessions is a quantity of multicast sessions that are allowed to be occupied by the first application server to establish a multicast session and that are not allowed to be occupied by an application server other than the first application server to establish a multicast session. The quantity of unoccupied multicast sessions is a quantity of multicast sessions other than a quantity of occupied multicast sessions in the quantity of dedicated multicast sessions. The quantity of occupied multicast sessions is a quantity of multicast sessions occupied in a multicast session already established for the first application server.

It can be learned from the method according to the first aspect that, when an application server, for example, the first application server, needs to establish a multicast session, the application server can occupy a quantity of multicast sessions allocated by the core network element to the first application server, and establish the multicast session, but cannot occupy a quantity of multicast sessions allocated by the core network element to another application server, and establish the multicast session. In this way, each application server can establish a multicast session within an allowed range of a quantity of multicast sessions allocated by the core network element to the application server, to avoid a case in which a multicast session of another server is interrupted or disrupted because the first application server preempts a quantity of multicast sessions of the another server when establishing a multicast session. This improves reliability of a broadcast/multicast session and improves service stability and continuity.

Optionally, based on the first request message, after the core network element occupies the quantity of unoccupied multicast sessions, and establishes the first multicast session for the first application server, the method according to the first aspect further includes: The core network element sends a first response message to the first application service. The first response message indicates that the core network element has established the first multicast session for the first application server, so that the first application server can learn that the first multicast session has been successfully established, to prevent a service from being affected due to misjudgment or misprocessing performed by the first application server because the first application server does not determine whether the first multicast session is successfully established.

Optionally, based on the first request message, after the core network element occupies the quantity of unoccupied multicast sessions, and establishes the first multicast session for the first application server, the method according to the first aspect further includes: The core network element reduces the quantity of unoccupied multicast sessions from a first quantity to a second quantity. The first quantity is the quantity of unoccupied multicast sessions in the quantity of dedicated multicast sessions before the first multicast session is established, and the second quantity is a quantity of unoccupied multicast sessions in the quantity of dedicated multicast sessions after the first multicast session is established, to ensure that the quantity of occupied multicast sessions can match the quantity of established multicast sessions in real time.

Optionally, the method according to the first aspect further includes: The core network element receives a second request message from the first application server, where the second request message is for requesting to establish a multicast session for first application server. If the second quantity is less than a quantity of multicast sessions that the second request message requests to establish, the core network element may reject, based on the second request message, to establish the multicast session for the first application server, to prevent a newly established multicast session from affecting an established multicast session, so as to ensure reliability and stability of the established multicast session. Alternatively, based on the second request message, the core network element may occupy the quantity of occupied multicast sessions, and establish a second multicast session for the first application server. In other words, when the first application server has a new service requirement, the new service requirement may be preferentially ensured.

Further, based on the second request message, that the core network element occupies the quantity of occupied multicast sessions, and establishes a second multicast session for the first application server includes: The core network element releases, based on the second request message, a third multicast session in a multicast session already established for the first application server, to increase the quantity of unoccupied multicast sessions from the second quantity to a third quantity. If the third quantity is greater than or equal to the quantity of multicast sessions that the second request message requests to establish, the core network element occupies the quantity of unoccupied multicast sessions, and establishes the second multicast session for the first application server. In other words, the core network element needs to first release the established multicast session to adjust the quantity of unoccupied multicast sessions, to ensure that the quantity of unoccupied multicast sessions can meet a current service requirement, so as to successfully establish a multicast session corresponding to the new service requirement.

Optionally, that the core network element releases, based on the second request message, a third multicast session in a multicast session already established for the first application server includes: The core network element releases the third multicast session by determining that a priority of the multicast session that the second request message requests to establish for the first application server is higher than a priority of the third multicast session, to ensure that a multicast session with a high priority can be preferentially guaranteed.

Optionally, the method according to the first aspect further includes: The core network element receives a second request message from the first application server. If the quantity of unoccupied multicast sessions in the quantity of dedicated multicast sessions of the first application server is less than a quantity of multicast sessions that the second request message requests to establish, and a quantity of unoccupied multicast sessions in a quantity of shared multicast sessions is greater than or equal to the quantity of multicast sessions that the second request message requests to establish, based on the second request message, the core network element occupies the quantity of unoccupied multicast sessions in the quantity of shared multicast sessions, and establishes a second multicast session for the first application server. The second request message is for requesting to establish a multicast session for the first application server. The quantity of shared multicast sessions is a quantity of multicast sessions that are allowed to be occupied by a plurality of application servers to establish multicast sessions. The plurality of application servers include the first application server. The quantity of unoccupied multicast sessions in the quantity of shared multicast sessions is a quantity of multicast sessions, in the quantity of shared multicast sessions, other than a quantity of occupied multicast sessions in the quantity of shared multicast sessions. The quantity of occupied multicast sessions in the quantity of shared multicast sessions is a quantity of multicast sessions occupied in a multicast session already established for at least a part of the plurality of application servers. It may be understood that, when quantities of dedicated multicast sessions of the plurality of application servers are insufficient, a service requirement may be ensured by the quantity of shared multicast sessions, to further improve stability and reliability of a service and flexibility of allocating the quantity of multicast sessions.

Optionally, the method according to the first aspect further includes: If the quantity of unoccupied multicast sessions in the quantity of dedicated multicast sessions is less than the quantity of multicast sessions that the first request message requests to establish, and a quantity of unoccupied multicast sessions in a quantity of shared multicast sessions is less than a quantity of multicast sessions that the second request message requests to establish, the core network element rejects, based on the second request message, to establish the multicast session for the first application server, to prevent a newly established multicast session from affecting an established multicast session, so as to ensure reliability and stability of the established multicast session.

In a possible design solution, the core network element is at least one or more of the following: a broadcast/multicast service center BM-SC, a multimedia broadcast/multicast service gateway MBMS-GW, a mobility management entity MME, or a multi-cell/multicast coordination entity MCE, to be applicable to more service scenarios.

According to a second aspect, a communication method is provided. The method includes: A first application server obtains a first identifier when a multicast session needs to be established, and sends, to a core network element, a first request message that carries the first identifier. The first identifier identifies the first application server in a plurality of application servers. The first request message is for requesting the core network element to establish, based on the first identifier, a multicast session for the first application server in the plurality of application servers.

It can be learned from the method according to the second aspect that, in a scenario in which the plurality of application servers need to establish multicast sessions, the core network element can uniquely identify, by using identifiers, an application server that has a service requirement, to prevent a service from being affected due to incorrectly establishing or mis-establishing a multicast session by the core network element.

Optionally, after the first application server sends, to the core network element, the first request message that carries the first identifier, the method according to the first aspect further includes: The first application server receives a first response message from the core network element. The first response message indicates that the core network element has established a first multicast session for the first application server.

After the first application server sends, to the core network element, a second request message that carries the first identifier, the method according to the first aspect further includes: The first application server sends, to the core network element, the second request message that carries the first identifier. The second request message is for requesting the core network element to establish, based on the first identifier, a multicast session for the first application server in the plurality of application servers. In a scenario in which the plurality of application servers need to establish multicast sessions, the core network element can uniquely identify, by using identifiers, an application server that has a service requirement, to prevent a service from being affected due to incorrectly establishing or mis-establishing a multicast session by the core network element.

After the first application server sends, to the core network element, the second request message that carries the first identifier, the method according to the first aspect further includes: The first application server receives a second response message from the core network element. The second response message indicates that the core network element has established a second multicast session for the first application server, or the second response message indicates that the core network element rejects to establish, for the first application server, the multicast session that the second request message requests to establish. In this way, the first application server can learn that the second multicast session is successfully established or fails to be established, to prevent a service from being affected due to misjudgment or misprocessing performed by the first application server because the first application server does not determine whether the second multicast session is successfully established.

In a possible design solution, the core network element is at least one or more of the following: a broadcast/multicast service center BM-SC, a multimedia broadcast/multicast service gateway MBMS-GW, a mobility management entity MME, or a multi-cell/multicast coordination entity MCE.

According to a third aspect, a communication apparatus is provided. The communication apparatus includes modules configured to perform the method according to the first aspect, for example, a transceiver module and a processing module.

The transceiver module is configured to receive a first request message from a first application server. The processing module is configured to: if a quantity of unoccupied multicast sessions in a quantity of dedicated multicast sessions of the first application server is greater than or equal to a quantity of multicast sessions that the first request message requests to establish, based on the first request message, occupy the quantity of unoccupied multicast sessions, and establish a first multicast session for the first application server. The first request message is for requesting to establish a multicast session for the first application server. The quantity of dedicated multicast sessions is a quantity of multicast sessions that are allowed to be occupied by the first application server to establish a multicast session and that are not allowed to be occupied by an application server other than the first application server to establish a multicast session. The quantity of unoccupied multicast sessions is a quantity of multicast sessions other than a quantity of occupied multicast sessions in the quantity of dedicated multicast sessions. The quantity of occupied multicast sessions is a quantity of multicast sessions occupied in a multicast session already established for the first application server.

Optionally, the transceiver module is further configured to: based on the first request message, after occupying the quantity of unoccupied multicast sessions, and establishing the first multicast session for the first application server, send a first response message to the first application service. The first response message indicates that a core network element has established the first multicast session for the first application server.

Optionally, the transceiver module is further configured to: based on the first request message, after the core network element occupies the quantity of unoccupied multicast sessions, and establishes the first multicast session for the first application server, reduce the quantity of unoccupied multicast sessions from a first quantity to a second quantity. The first quantity is the quantity of unoccupied multicast sessions in the quantity of dedicated multicast sessions before the first multicast session is established, and the second quantity is a quantity of unoccupied multicast sessions in the quantity of dedicated multicast sessions after the first multicast session is established.

Optionally, the transceiver module is further configured to receive a second request message from the first application server. The processing module is further configured to: if the second quantity is less than a quantity of multicast sessions that the second request message requests to establish, reject, based on the second request message, to establish the multicast session for the first application server; or based on the second request message, occupy the quantity of occupied multicast sessions, and establish a second multicast session for the first application server.

Further, the processing module is configured to: release, based on the second request message, a third multicast session in a multicast session already established for the first application server, to increase the quantity of unoccupied multicast sessions from the second quantity to a third quantity; and if the third quantity is greater than or equal to the quantity of multicast sessions that the second request message requests to establish, occupy the quantity of unoccupied multicast sessions, and establish the second multicast session for the first application server.

Optionally, the processing module is further configured to release the third multicast session by determining that a priority of the multicast session that the second request message requests to establish for the first application server is higher than a priority of the third multicast session.

Optionally, the transceiver module is further configured to receive a second request message from the first application server. The processing module is configured to: if the quantity of unoccupied multicast sessions in the quantity of dedicated multicast sessions is less than a quantity of multicast sessions that the second request message requests to establish, and a quantity of unoccupied multicast sessions in a quantity of shared multicast sessions is greater than or equal to the quantity of multicast sessions that the second request message requests to establish, based on the second request message, occupy the quantity of unoccupied multicast sessions in the quantity of shared multicast sessions, and establish a second multicast session for the first application server. The second request message is for requesting to establish a multicast session for the first application server. The quantity of shared multicast sessions is a quantity of multicast sessions that are allowed to be occupied by a plurality of application servers to establish multicast sessions. The plurality of application servers include the first application server. The quantity of unoccupied multicast sessions in the quantity of shared multicast sessions is a quantity of multicast sessions, in the quantity of shared multicast sessions, other than a quantity of occupied multicast sessions in the quantity of shared multicast sessions. The quantity of occupied multicast sessions in the quantity of shared multicast sessions is a quantity of multicast sessions occupied in a multicast session already established for at least a part of the plurality of application servers.

Optionally, the transceiver module is further configured to receive a second request message from the first application server. The processing module is configured to: if the quantity of unoccupied multicast sessions in the quantity of dedicated multicast sessions is less than the quantity of multicast sessions that the first request message requests to establish, and a quantity of unoccupied multicast sessions in a quantity of shared multicast sessions is less than a quantity of multicast sessions that the second request message requests to establish, reject, based on the second request message, to establish the multicast session for the first application server. The second request message is for requesting to establish a multicast session for the first application server.

In a possible design solution, the core network element is at least one or more of the following: a broadcast/multicast service center BM-SC, a multimedia broadcast/multicast service gateway MBMS-GW, a mobility management entity MME, or a multi-cell/multicast coordination entity MCE.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is enabled to perform the method according to the first aspect.

It may be understood that the communication apparatus according to the third aspect may be a core network element, or may be a chip (system) or another part or component that may be disposed in the core network element, or may be an apparatus including the core network element. This is not limited in this application.

In addition, for technical effects of the communication apparatus according to the third aspect, refer to technical effects of the method according to the first aspect. Details are not described herein again.

According to a fourth aspect, a communication apparatus is provided. The communication apparatus includes modules configured to perform the method according to the second aspect, for example, a transceiver module and a processing module.

The processing module is configured to: obtain a first identifier when a multicast session needs to be established. The transceiver module is configured to send, to a core network element, a first request message that carries a first identifier. The first identifier identifies the communication apparatus according to the fourth aspect in a plurality of application servers. The first request message is for requesting the core network element to establish, based on the first identifier, a multicast session for the communication apparatus in the plurality of application servers.

Optionally, the transceiver module is further configured to: after sending, to the core network element, the first request message that carries the first identifier, receive a first response message from the core network element. The first response message indicates that the core network element has established a first multicast session for the communication apparatus according to the fourth aspect.

Optionally, the transceiver module is further configured to: after sending, to the core network element, the first request message that carries the first identifier, receive a first response message from the core network element. The first response message indicates that the core network element has established a first multicast session for the communication apparatus according to the fourth aspect.

Optionally, the transceiver module is further configured to: after sending, to the core network element, the first request message that carries the first identifier, send, to the core network element, a second request message that carries the first identifier. The second request message is for requesting the core network element to establish, based on the first identifier, a multicast session for the communication apparatus in the plurality of application servers.

The transceiver module is further configured to: after a first application server sends, to the core network element, the second request message that carries the first identifier, receive a second response message from the core network element. The second response message indicates that the core network element has established a second multicast session for the communication apparatus according to the fourth aspect, or the second response message indicates that the core network element rejects to establish, for the communication apparatus, the multicast session that the second request message requests to establish.

In a possible design solution, the core network element is at least one or more of the following: a broadcast/multicast service center BM-SC, a multimedia broadcast/multicast service gateway MBMS-GW, a mobility management entity MME, or a multi-cell/multicast coordination entity MCE.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the method according to the second aspect.

It may be understood that the communication apparatus according to the fourth aspect may be a network device, for example, the first application server, or may be a chip (system) or another part or component that may be disposed in the network device, or may be an apparatus including the network device. This is not limited in this application.

In addition, for technical effects of the communication apparatus according to the fourth aspect, refer to technical effects of the method according to the second aspect. Details are not described herein again.

According to a fifth aspect, a communication apparatus is provided. The communication apparatus includes a processor. The processor is configured to perform the communication method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the communication method according to the first aspect or the second aspect.

In this application, the communication apparatus according to the fifth aspect may be a network device, a chip (system) or another part or component that may be disposed in the network device, or an apparatus including the network device.

In addition, for technical effects of the communication apparatus according to the fifth aspect, refer to technical effects of the communication method according to the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to enable the communication apparatus to perform the communication method according to the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be a network device, a chip (system) or another part or component that may be disposed in the network device, or an apparatus including the network device.

In addition, for technical effects of the communication apparatus according to the sixth aspect, refer to technical effects of the communication method according to the first aspect or the second aspect. Details are not described herein again.

According to a seventh aspect, a communication apparatus is provided, and includes a processor and a memory. The memory is configured to store a computer program. When the processor executes the computer program, the communication apparatus is enabled to perform the communication method according to the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a network device, a chip (system) or another part or component that may be disposed in the network device, or an apparatus including the network device.

In addition, for technical effects of the communication apparatus according to the seventh aspect, refer to technical effects of the communication method according to the first aspect or the second aspect. Details are not described herein again.

According to an eighth aspect, a communication apparatus is provided, and includes a processor. The processor is configured to: after being coupled to a memory and reading a computer program in the memory, perform the communication method according to the first aspect or the second aspect based on the computer program.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a network device, a chip (system) or another part or component that may be disposed in the network device, or an apparatus including the network device.

In addition, for technical effects of the communication apparatus according to the eighth aspect, refer to technical effects of the communication method according to the first aspect or the second aspect. Details are not described herein again.

According to a ninth aspect, a communication system is provided. The communication system includes the first network element according to the first aspect and/or the application function according to the second aspect.

According to a tenth aspect, a computer-readable storage medium is provided, including a computer program or instructions. When the computer program or the instructions are run on a computer, the computer is enabled to perform the communication method according to the first aspect or the second aspect.

According to an eleventh aspect, a computer program product is provided, including a computer program or instructions. When the computer program or the instructions are run on a computer, the computer is enabled to perform the communication method according to the first aspect or the second aspect.

### BRIEF DESCRIPTION OF DRAWINGS

FIG. 1 is a diagram of an architecture of a 4G system;
FIG. 2 is a diagram of an architecture of a 4G MBMS;
FIG. 3 is a schematic flowchart of establishing an MBMS session;
FIG. 4 is a schematic flowchart of releasing an MBMS session;
FIG. 5 is a schematic flowchart of modifying an MBMS session;
FIG. 6 is a diagram of an architecture of a communication system according to an embodiment of this application;
FIG. 7 is a schematic flowchart of a communication method according to an embodiment of this application;
FIG. 8 is a diagram of a first scenario in which a plurality of application servers establish multicast sessions according to an embodiment of this application;
FIG. 9 is a diagram of first distribution of quantities of dedicated multicast sessions corresponding to a plurality of application servers according to an embodiment of this application;
FIG. 10 is a diagram of a second scenario in which a plurality of application servers establish multicast sessions according to an embodiment of this application;
FIG. 11 is a diagram of second distribution of quantities of dedicated multicast sessions corresponding to a plurality of application servers according to an embodiment of this application;
FIG. 12 is a diagram of a third scenario in which a plurality of application servers establish multicast sessions according to an embodiment of this application;
FIG. 13 is a diagram of distribution of quantities of dedicated multicast sessions and a quantity of shared multicast sessions that correspond to a plurality of application servers according to an embodiment of this application;
FIG. 14 is a diagram of a first structure of a communication apparatus according to an embodiment of this application; and
FIG. 15 is a diagram of a second structure of a communication apparatus according to an embodiment of this application.

### DESCRIPTION OF EMBODIMENTS

For ease of understanding, technical terms in embodiments of this application are described first below.

### 1. 4th generation (4th generation, 4G) mobile communication system:

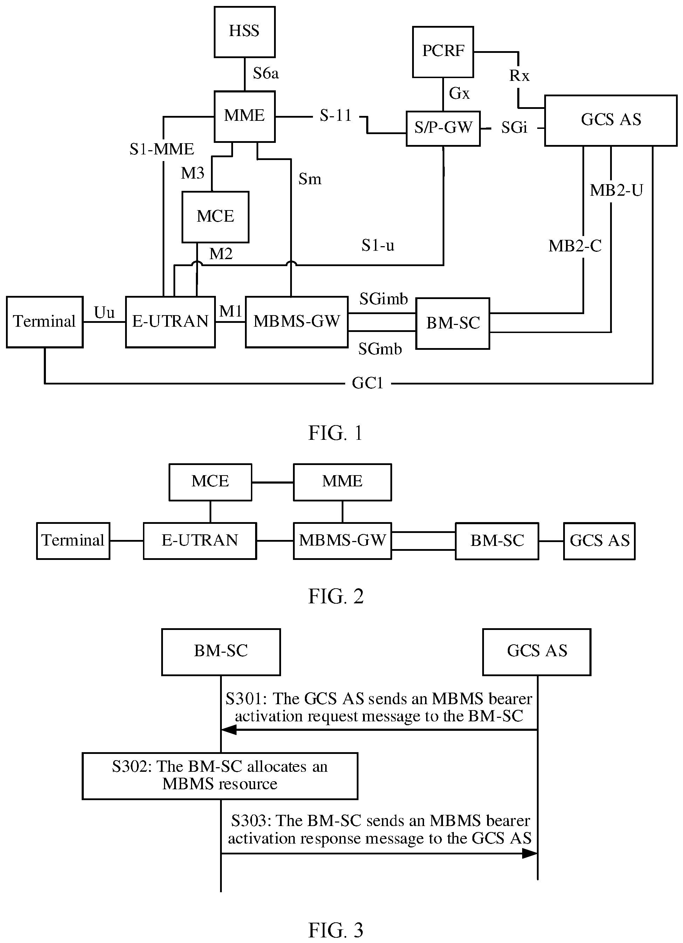

As shown in FIG. 1, the 4G system or evolved packet system (evolved packet system, EPS) includes network elements or devices such as a group communication service application server (group communication service application server, GCS AS), a broadcast/multicast service center (broadcast/multicast service center, BM-SC), a multimedia broadcast/multicast service gateway MBMS-GW (multimedia broadcast/multicast service gateway, MBMS-GW), a service/packet data network gateway (serving/packet data network gateway, S/P-GW), a policy and charging rules function (policy and charging rules function, PCRF), a mobility management entity (mobility management entity, MME), a home subscriber server (home subscriber server, HSS), an evolved universal mobile telecommunications system (universal mobile telecommunications system, UMTS) terrestrial radio access network (evolved UMTS territorial radio access network, E-UTRAN) device, and a terminal. A multi-cell/multicast coordination entity (multi-cell/multicast coordination entity, MCE) may be built in the E-UTRAN, that is, a distributed MCE. The MCE may alternatively be independently deployed, that is, a centralized MCE.

The terminal may be a terminal having a transceiver function, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The terminal accesses the E-UTRAN device through Uu. The E-UTRAN device may be an evolved NodeB (eNodeB, eNB) or a next generation-eNB (next generation-eNB, ng-eNB). The E-UTRAN device is mainly configured to provide a network access function for a terminal in a specific area, for example, a network signal coverage area of the E-UTRAN device, so that the terminal can access, through the E-UTRAN device, and be attached to a 4G network. The E-UTRAN device communicates with the MME through S1-MME, communicates with the MBMS-GW through M1, communicates with the MCE through M2, and communicates with the S/P-GW through S1-U. The MCE communicates with the MME through M3. The MME is mainly responsible for functions such as mobility management, bearing management, user authentication, and S/P-GW selection. The MME communicates with the HSS through S6a, communicates with the S/P-GW through S-11, and communicates with the MBMS-GW through Sm. The MBMS-GW is mainly configured to transfer an MBMS session control message to the MME and forward MBMS service data to the E-UTRAN. The MBMS-GW communicates with the BM-SC through SGimb and SGmb. The BM-SC is configured to authorize an MBMS bearer service. The BM-SC communicates with the GCS AS through MB2-C and MB2-U. The S/P-GW accesses a server through SGi and communicates with the PCRF through Gx. The PCRF accesses the GCS AS through Rx. The GCS AS communicates with the terminal through GC1.

Optionally, to be backward compatible with a general packet radio service (general packet radio service, GPRS) data service provided by a 2G/3G system and better implement interworking between the 4G system and the 2G/3G system, the 4G system may further include a UTRAN/global system for mobile communications (global system for mobile communications, GSM) or enhanced data rate GSM evolution (enhanced data rate for GSM evolution, EDGE) radio access network (GSM/EDGE radio access network, GERAN) device and a serving GPRS support node (serving GPRS support node, SGSN) (not shown in FIG. 1) of a 2nd generation (2nd generation, 2G)/3rd generation (3rd generation, 3G) system, which participate in inter-system mobility of the terminal between the 4G system and the 2G/3G system, including switching between an idle state and a connected state. Descriptions are provided herein, and details are not described below again.

### 2. 4G multimedia broadcast/multicast service (multicast broadcast multimedia service, MBMS) architecture:

As shown in FIG. 2, the 4G MBMS architecture includes a terminal, an E-UTRAN, an MCE, an MME, an MBMS-GW, a BM-SC, and a GCS AS.

In the foregoing MBMS architecture, an MBMS session may be established, an MBMS session may be released, and an MBMS session may be modified. Details are described below.

### (1) Establish an MBMS session:

As shown in FIG. 3, a procedure of establishing the MBMS session is specifically as follows:
S301: The GCS AS sends an MBMS bearer activation request message to the BM-SC.

The MBMS bearer activation request message may include a terminal mobile group identity (temporary mobile group identity, TMGI), quality of service (quality of service, QoS), an MBMS broadcast area, and start time of a started MBMS bearer.

The TMGI identifies an identifier of a multicast session that needs to be established. In other words, the TMGI identifies an identifier of a multicast session of an MBMS bearer that needs to be activated. The QoS may include priority information of the multicast session that needs to be established. For example, the QoS may include an allocation and retention priority (allocation and retention priority, ARP), and the ARP includes a priority level, a preemption capability, and a preemption vulnerability. The MBMS broadcast area is a specific area in which a plurality of UEs that receive same multicast content are located. For example, the MBMS broadcast area may include a plurality of cells, and an MBMS broadcast area parameter may include an MBMS service area identifier list or a cell ID list, or both an MBMS service area identifier list and a cell ID list. The start time may include start time of the multicast session.

S302: The BM-SC allocates an MBMS resource.

If the MBMS bearer activation request message includes the TMGI, the BM-SC needs to determine whether the GCS AS is authorized to use the TMGI. If the GCS AS is not authorized to use the TMGI, the BM-SC needs to reject the request for activating the MBMS bearer. If the MBMS bearer activation request message does not include the TMGI, the BM-SC may allocate an unused value to the TMGI, and allocate an identifier (identity document, ID) of a flow (Flow) corresponding to the TMGI and the MBMS broadcast area, for example, a FlowID value. The GCS AS may use the flow for service data transmission.

The BM-SC may further send a session start request message to the MBMS-GW, the MME, and the MCE, to request the E-UTRAN device to allocate an MBMS session resource to a multicast service. For a specific process of allocating the MBMS resource, refer to a session start process defined in conventional technologies, to support the MBMS bearer in transferring content to the requested MBMS broadcast area. Details are not described herein.

S303: The BM-SC sends an MBMS bearer activation response message to the GCS AS.

The MBMS bearer activation response message may include the TMGI, the allocated FlowID, a service description, a BM-SC user plane IP address, a port number, expiration time of the multicast session, and the like. The service description may include related configuration information of the MBMS bearer, for example, a radio frequency and an MBMS service area identifier.

The procedure may further include: The BM-SC receives, from the MBMS-GW, an MBMS session response message and a notification indicating that the MBMS bearer is activated in the E-UTRAN. The BM-SC sends an MBMS sending status indication message to the GCS AS. The MBMS sending status indication message may include the TMGI, the allocated FlowID, and a radio resource allocation status. The radio resource allocation status indicates whether the terminal allocates a multicast session resource to the multicast session requested by the MBMS bearer activation request message.

It may be understood that, for specific implementations of S301 to S303, reference is made to related descriptions in TS 23.246. Details are not described herein again.

### (2) Release an MBMS session:

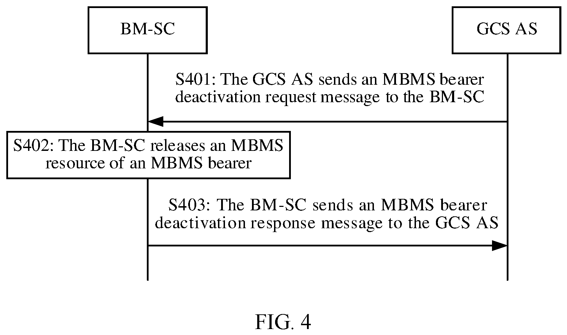

As shown in FIG. 4, a procedure of releasing the MBMS session is specifically as follows:
S401: The GCS AS sends an MBMS bearer deactivation request message to the BM-SC.

The MBMS bearer deactivation request message may include a TMGI and a FlowID that represent an MBMS bearer that is to be deactivated.

S402: The BM-SC releases an MBMS resource of the MBMS bearer.

Specifically, the BM-SC checks whether the GCS AS is authorized to use the TMGI, stops broadcasting the MBMS bearer to an agreed MBMS service area, and releases, by using a session stop procedure, the MBMS resource used for the MBMS bearer.

The BM-SC may further send a session stop request message to the MBMS-GW, the MME, and the MCE, to request the E-UTRAN device to release an MBMS session resource allocated to a multicast service. For a specific process of releasing the MBMS resource, refer to a session release process defined in conventional technologies. Details are not described herein.

S403: The BM-SC sends an MBMS bearer deactivation response message to the GCS AS.

The MBMS bearer deactivation response message may include the TMGI, the FlowID, and a result, and the result may indicate whether the MBMS session is successfully released.

It may be understood that, for specific implementations of S401 to S403, reference is made to related descriptions in TS 23.246. Details are not described herein again.

### (3) Modify an MBMS session:

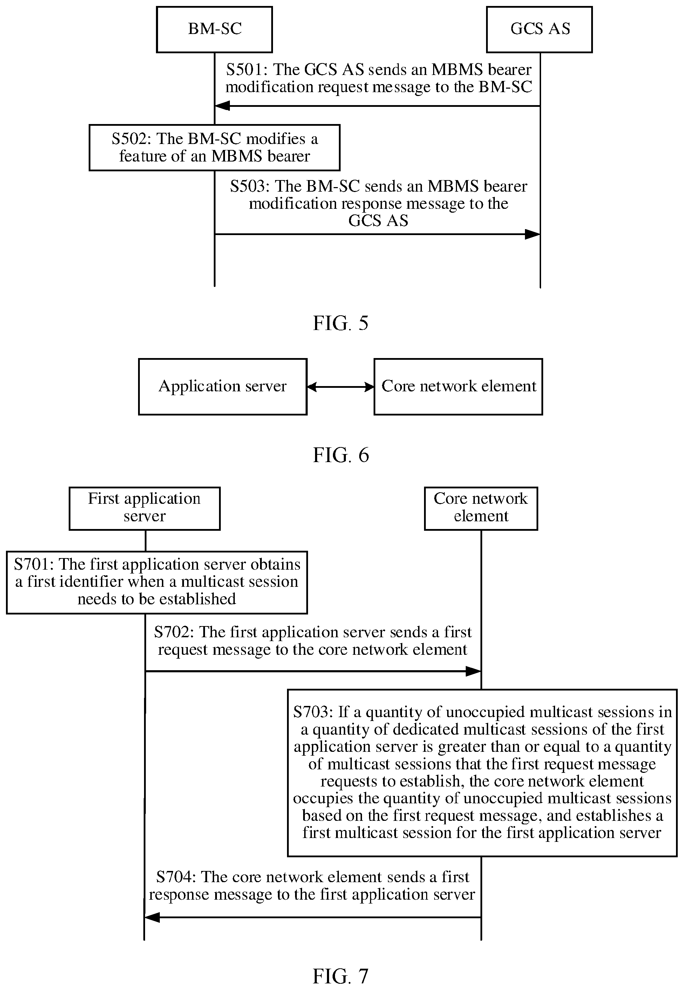

As shown in FIG. 5, a procedure of modifying the MBMS session is specifically as follows:
S501: The GCS AS sends an MBMS bearer modification request message to the BM-SC.

The MBMS bearer modification request message includes a TMGI, a FlowID, a new priority, a preemption feature, and an MBMS broadcast area. The priority, the preemption feature, and the MBMS broadcast area are optional parameters, but one of the parameters needs to be included in an MBMS bearer modification request.

S502: The BM-SC modifies a feature of an MBMS bearer.

Specifically, if the MBMS broadcast area is being modified, the BM-SC may accept the request when a new MBMS broadcast area does not overlap an MBMS broadcast area of any other existing MBMS bearer having a same TMGI.

The BM-SC may further send a session update request message to the MBMS-GW, the MME, and the MCE, to request the E-UTRAN device to modify an MBMS session resource for a multicast service. For a specific process of modifying the feature of the MBMS bearer, refer to a session update process defined in conventional technologies. Details are not described herein.

S503: The BM-SC sends an MBMS bearer modification response message to the GCS AS.

The MBMS bearer modification response message may include the TMGI, the FlowID, and a result, and the result may indicate whether the MBMS session is successfully modified.

The procedure may further include: The BM-SC receives, from the MBMS-GW, an MBMS session update response message and a notification indicating that the MBMS bearer is modified in the E-UTRAN. The BM-SC sends an MBMS sending status indication message to the GCS AS. The MBMS sending status indication information may include the TMGI, the allocated FlowID, a radio resource allocation condition, and the like.

It may be understood that, for specific implementations of S501 to S503, reference is made to related descriptions in TS 23.246. Details are not described herein again.

Currently, the 3GPP protocol defines a multicast service in an application server, and a broadcast/multicast session may be established based on an ARP. However, in an actual scenario, an independent application server is usually used for a government department. If a same service priority is set for a plurality of application servers, a government department that initiates a service later cannot establish a multicast session. Alternatively, if a service priority set for an application server of a government department is higher than a service priority set for an application server of another government department, the government department with a high service priority preempts a resource of an ongoing multicast session in another government department with a low service priority, resulting in an interruption of an emergency or important service of the another department. Consequently, reliability of a broadcast/multicast session established based on a service priority is poor, and service stability and continuity are affected.

For the foregoing technical problem, embodiments of this application provide the following technical solutions, to improve reliability of a broadcast/multicast session and improve service stability and continuity.

The technical solutions of this application are described below with reference to the accompanying drawings.

The technical solutions in embodiments of this application may be applied to various communication systems, for example, a radio network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5th generation (5th generation, 5G), for example, a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

For ease of understanding embodiments of this application, a communication system shown in FIG. 6 is first used as an example to describe in detail a communication system applicable to embodiments of this application. For example, the figure is a diagram of an architecture of a communication system to which a communication method according to an embodiment of this application is applicable.

As shown in FIG. 6, the communication system may include a core network element and an application server.

There may be a plurality of application servers. Any application server may be specifically the foregoing GCS AS or any other possible application server, for example, an application function (application function, AF). This is not limited herein.

The core network element may be a core network element in the foregoing 4G system. For example, the core network element may be at least one or more of the following: a BM-SC, an MBMS-GW, an MME, or an MCE. This is not limited herein.

The BM-SC may be configured to authorize an MBMS bearer service. For example, the BM-SC may provide functions such as user management, session transmission, service announcement, security management, and content synchronization. For a content provider, the BM-SC is an entry for MBMS service content distribution. For a bearer network, the BM-SC is responsible for functions such as authorization, broadcast/multicast service initiation, scheduling, and content transmission.

The MBMS-GW may be responsible for distribution and control of an MBMS service, and the MBMS-GW may include a control plane function and a user plane function.

The MME may be configured to process signaling. For example, the MME may be responsible for mobility management, bearer management, user authentication, and the like.

The MCE may be configured to allocate time domain and frequency domain resources to an MBMS, and determine a coding and modulation scheme of a radio channel. It may be understood that the MCE may be an independent entity, or may be implemented in an E-UTRAN as a logical entity. In this embodiment of this application, the MCE is independently deployed, that is, an external centralized MCE.

In the communication system in this embodiment of this application, when a first application server has a service requirement, the first application server may send, to the core network element, a first request message that carries a first identifier, and the core network element may allocate, to the first application server, a quantity of dedicated multicast sessions of the first application server based on the received first request message, to establish a first multicast session. The quantity of dedicated multicast sessions is allowed to be occupied by the first application server to establish a multicast session, and is not allowed to be occupied by an application server other than the first application server to establish a multicast session, to avoid a case in which a multicast session of another server is interrupted or disrupted because the first application server preempts a quantity of multicast sessions of the another server when establishing a multicast session. This improves reliability of a broadcast/multicast session and improves service stability and continuity.

With reference to FIG. 7 to FIG. 13, an interaction procedure between the first application server in the foregoing plurality of application servers and the core network element is described below in detail by using method embodiments.

Specifically, as shown in FIG. 7, a procedure of the communication method is as follows:
S701: The first application server obtains a first identifier when a multicast session needs to be established.

The multicast session may be an MBMS session or any other possible multicast session. For a specific implementation principle, refer to the foregoing related descriptions of the MBMS. Details are not described herein again.

The first identifier may uniquely identify the first application server in the plurality of application servers, and may be specifically an internet protocol (internet protocol, IP) address of the first application server, or a government department identifier corresponding to the first application server, for example, a name or a code (Identity document, ID) of a government department.

A purpose of obtaining the first identifier by the first application server is to trigger S702.

S702: The first application server sends a first request message to the core network element. The core network element receives the first request message from the first application server.

The first request message may be for requesting the core network element to establish one or more multicast sessions for the first application server. For ease of understanding, one multicast session is used as an example subsequently.

For example, the first request message may carry the first identifier, to indicate, by using the first identifier, that an application server that currently requests to establish a multicast session is the first application server. In other words, the first request message carries the first identifier to indicate that the first application server requests to establish a multicast session. The first request message may be specifically an MBMS bearer activation request message. In this case, the MBMS bearer activation request message may further include some optional parameters required for establishing a multicast session, for example, a TMGI, QoS, an MBMS broadcast area, and start time. For specific implementation, refer to the foregoing related descriptions of S301. Details are not described again.

It may be understood that the first request message may alternatively be a first message, a request message #1, or the like, and the first request message is merely an example.

The first application server may encapsulate the obtained first identifier into the first request message, and then send the first request message to the core network element. Correspondingly, after the core network element receives the first request message, the core network element may obtain the first identifier from the first request message, to determine, based on the first identifier, that the application server that currently requests to establish the multicast session is the first application server, so as to trigger execution of S703.

S703: If a quantity of unoccupied multicast sessions in a quantity of dedicated multicast sessions of the first application server is greater than or equal to a quantity of multicast sessions that the first request message requests to establish, based on the first request message, the core network element occupies the quantity of unoccupied multicast sessions, and establishes a first multicast session for the first application server.

The quantity of dedicated multicast sessions of the first application server may be a quantity of dedicated multicast sessions pre-allocated by the core network element to the first application server based on the first identifier. To be specific, the quantity of dedicated multicast sessions of the first application server is a quantity of multicast sessions that are allowed to be occupied by the first application server to establish a multicast session and that are not allowed to be occupied by an application server other than the first application server to establish a multicast session. In other words, the quantity of dedicated multicast sessions of the first application server may alternatively be a maximum quantity of multicast sessions that can be activated by the first application server.

The quantity of multicast sessions occupied by the first application server to establish a multicast session may be: When establishing a multicast session for the first application server, the core network element needs to allocate, to the multicast session, one or more unoccupied multicast sessions from the quantity of dedicated multicast sessions. In this case, the first application server may occupy the quantity of multicast sessions allocated by the core network element to the first application server, to establish the multicast session. In other words, the quantity of dedicated multicast sessions may be, when the first application server establishes a multicast session, a quantity of multicast sessions that the core network element allows the first application server to use and does not allow another application server, for example, an application server other than the first application server to use.

To be specific, actually, the core network element allocates, for each application server, a quantity of dedicated multicast sessions of the application server, and each application server needs to use the quantity of dedicated multicast sessions of the application server to establish a quantity of multicast sessions.

For ease of understanding, an example is used below for description. The application server includes an application server #1 and an application server #2. A quantity #1 of dedicated multicast sessions of the application server #1 is 10, and a quantity of unoccupied multicast sessions in the quantity #1 of dedicated multicast sessions is one. A quantity #2 of dedicated multicast sessions of the application server #2 is 10, and a quantity of unoccupied multicast sessions in the quantity #2 of dedicated multicast sessions is five. In this case, if the application server #1 has a new service requirement, the application server #1 may send, to the core network element, a request message #1 that carries an identifier #1, and the core network element may allocate the quantity of unoccupied multicast sessions in the quantity #1 of dedicated multicast sessions to the application server #1 based on the identifier #1 in the received request message #1, to establish a multicast session #1. In this case, the quantity of unoccupied multicast sessions in the quantity #1 of dedicated multicast sessions is reduced from one to zero. It may be understood that the first application server may establish a multicast session by using the quantity of unoccupied multicast sessions in the quantity #1 of dedicated multicast sessions, but cannot establish a multicast session by using the quantity of unoccupied multicast sessions in the quantity #2 of dedicated multicast sessions.

If the application server #2 has a new service requirement, the application server #2 may send, to the core network element, a request message #2 that carries an identifier #2, and the core network element allocates any quantity of unoccupied multicast sessions in the quantity #2 of dedicated multicast sessions to the application server #2 based on the identifier #2 in the received request message #2, to establish a multicast session #2. In this case, a quantity of occupiable multicast sessions in the quantity #2 of dedicated multicast sessions is reduced from five to four. It may be understood that the application server #2 may establish a multicast session by using the quantity of unoccupied multicast sessions in the quantity #2 of dedicated multicast sessions, but cannot establish a multicast session by using the quantity of unoccupied multicast sessions in the quantity #1 of dedicated multicast sessions.

Based on the first request message, after occupying the quantity of unoccupied multicast sessions in the quantity of dedicated multicast sessions and establishing the first multicast session for the first application server, the core network element triggers execution of S704.

S704: The core network element sends a first response message to the first application service. The first application server receives the first response message from the core network element.

The first response message indicates that the core network element has established the first multicast session for the first application server.

It may be understood that the first response message may be the foregoing MBMS bearer activation response message. For detailed descriptions, refer to related descriptions in S303. This is not limited herein.

In conclusion, when an application server, for example, the first application server, needs to establish a multicast session, the application server can occupy the quantity of multicast sessions allocated by the core network element to the first application server, and establish the multicast session, but cannot occupy a quantity of multicast sessions allocated by the core network element to another application server, and establish the multicast session. In this way, each application server can establish a multicast session within an allowed range of a quantity of multicast sessions allocated by the core network element to the application server, to avoid a case in which a multicast session of another server is interrupted or disrupted because the first application server preempts a quantity of multicast sessions of the another server when establishing a multicast session. This improves reliability of a broadcast/multicast session and improves service stability and continuity.

With reference to the foregoing embodiment, the method further includes: Based on the first request message, after the core network element occupies the quantity of unoccupied multicast sessions, and establishes the first multicast session for the first application server, the core network element may further reduce the quantity of unoccupied multicast sessions from a first quantity to a second quantity.

The first quantity is the quantity of unoccupied multicast sessions in the quantity of dedicated multicast sessions before the first multicast session is established, and the second quantity is a quantity of unoccupied multicast sessions in the quantity of dedicated multicast sessions after the first multicast session is established. It may be understood that when establishing a multicast session for the first application server, the core network element needs to allocate a multicast session from the quantity of dedicated multicast sessions to the multicast session. In this case, the quantity of unoccupied multicast sessions in the quantity of dedicated multicast sessions is updated, to be specific, the quantity of unoccupied multicast sessions in the quantity of dedicated multicast sessions is reduced, and a quantity of occupied multicast sessions is increased.

For example, continue to use the foregoing example. After the core network element allocates the quantity of unoccupied multicast sessions in the quantity #1 of dedicated multicast sessions to the application server #1 based on the identifier #1 in the received request message #1 to establish the multicast session #1, the quantity of unoccupied multicast sessions in the quantity #1 of dedicated multicast sessions is reduced from one to zero, that is, the first quantity is one, and the second quantity is zero. After the core network element allocates any unoccupied multicast session from the quantity #2 of dedicated multicast sessions to the application server #2 based on the identifier #2 in the received request message #2 to establish the multicast session #2, the quantity of unoccupied multicast sessions in the quantity #2 of dedicated multicast sessions is reduced from five to four, that is, the first quantity is five, and the second quantity is four.

Optionally, the method further includes: The core network element receives a second request message from the first application server. The first application server sends the second request message to the core network element.

For understanding of the second request message, refer to the first request message. Details are not described herein again.

It may be understood that the second request message may alternatively be a second message, a request message #2, or the like, and the second request message is merely an example. When the first application server has a new service requirement, the first application server may send the second request message to the core network element. If the second quantity is greater than or equal to a quantity of multicast sessions that the second request message requests to establish, it indicates that the quantity of unoccupied multicast sessions in the quantity of dedicated multicast sessions of the first application server can meet the new service requirement. In this case, the core network element may occupy the quantity of unoccupied multicast sessions in the quantity of dedicated multicast sessions, and establish a second multicast session, to meet the new service requirement.

If the second quantity is less than a quantity of multicast sessions that the second request message requests to establish, it indicates that the quantity of unoccupied multicast sessions in the quantity of dedicated multicast sessions of the first application server cannot meet the new service requirement. In this case, the core network element may reject to establish a multicast session for the first application server, to prevent a newly established multicast session from affecting an established multicast session, so as to ensure reliability and stability of the established multicast session. Alternatively, the core network element may occupy a quantity of occupied multicast sessions, and establish a second multicast session for the first application server. In other words, the core network element may establish a new multicast session by preempting a quantity of multicast sessions occupied in a multicast session already established for the first application server, to preferentially ensure the new service requirement.

For example, the core network element may release a third multicast session by determining that a priority of the multicast session that the second request message requests to establish for the first application server is higher than a priority of the third multicast session. In other words, when the first application server has a new service requirement and the quantity of unoccupied multicast sessions in the quantity of dedicated multicast sessions of the first application server cannot meet the new service requirement, the core network element may release a multicast session corresponding to a low-priority service. The third multicast session may include one or more multicast sessions. After the third multicast session is released, the quantity of unoccupied multicast sessions in the quantity of dedicated multicast sessions is increased, to be specific, the quantity of unoccupied multicast sessions is increased from the second quantity to a third quantity.

For example, continue to use the foregoing example. After the core network element establishes the multicast session #2 for the application server #2, if the application server #2 has a new service requirement, the application server #2 may send a request message #3 to the core network element, to request the core network element to establish a multicast session for the application server #2. In this case, the quantity of unoccupied multicast sessions in the quantity #2 of dedicated multicast sessions is four, and the service requirement can be met. Therefore, the core network element may establish a multicast session #3 for the application server #2 by using any quantity of unoccupied multicast sessions from the quantity #2 of dedicated multicast sessions.

After the core network element establishes the multicast session #1 for the application server #1, if the application server #1 has a new service requirement, the application server #1 may send a request message #4 to the core network element, to request the core network element to establish a multicast session for the application server #1. In this case, the quantity of unoccupied multicast sessions in the quantity #1 of dedicated multicast sessions is zero, and the service requirement cannot be met. The core network element may directly reject to establish a multicast session for the application server #1. Alternatively, the core network element may occupy a multicast session with a low priority, for example, the core network element may release a quantity of multicast sessions corresponding to the multicast session #1. In this case, the quantity of unoccupied multicast sessions in the quantity #1 of dedicated multicast sessions is changed to one, that is, the third quantity is one. In this case, the quantity of unoccupied multicast session, that is, one, in the quantity #1 of dedicated multicast sessions can meet the new service requirement, and the core network element may occupy one multicast session quantity released by the multicast session #1, and establish a multicast session #4 for the application server #1.

Optionally, the method further includes: The core network element receives a second request message from the first application server.

If the quantity of unoccupied multicast sessions in the quantity of dedicated multicast sessions is less than a quantity of multicast sessions that the second request message requests to establish, and a quantity of unoccupied multicast sessions in a quantity of shared multicast sessions is greater than or equal to the quantity of multicast sessions that the second request message requests to establish, based on the second request message, the core network element may occupy the quantity of unoccupied multicast sessions in the quantity of shared multicast sessions, and establish a second multicast session for the first application server.

If the quantity of unoccupied multicast sessions in the quantity of dedicated multicast sessions is less than the quantity of multicast sessions that the first request message requests to establish, and a quantity of unoccupied multicast sessions in a quantity of shared multicast sessions is less than a quantity of multicast sessions that the second request message requests to establish, the core network element may reject, based on the second request message, to establish a multicast session for the first application server.

The quantity of shared multicast sessions is a quantity of multicast sessions that are allowed to be occupied by the plurality of application servers to establish multicast sessions. To be specific, when establishing the multicast sessions for the plurality of application servers, the core network element may allocate one or more multicast sessions from the quantity of shared multicast sessions to the core network element. In this case, the plurality of application servers may occupy the one or more multicast sessions allocated by the core network element to the plurality of application servers, and establish multicast sessions.

For example, continue to use the foregoing example. The core network element allocates a quantity #1 of shared multicast sessions to the application server #1 and the application server #2, and the quantity #1 of shared multicast sessions includes 10 multicast sessions. If the core network element allocates three multicast sessions in the quantity #1 of shared multicast sessions to the application server #1 and allocates five multicast sessions in the quantity #1 of shared multicast sessions to the application server #2, in the quantity #1 of shared multicast sessions, a quantity of occupied multicast sessions is eight, and a quantity of unoccupied multicast sessions is two. After the core network element establishes the multicast session #4 for the application server #1, the quantity of unoccupied multicast sessions in the quantity #1 of dedicated multicast sessions is zero. If the application server #1 has a new service requirement, the application server #1 may send a request message #5 to the core network element, and the core network element may allocate any quantity of unoccupied multicast sessions in the quantity #1 of shared multicast sessions to the application server #1 based on the received request message #5, to establish a multicast session #5.

Optionally, after the first application server sends, to the core network element, the second request message that carries the first identifier, the method further includes:

The first application server receives a second response message from the core network element.

The second response message indicates that the core network element has established the second multicast session for the first application server, or the second response message indicates that the core network element rejects to establish, for the first application server, the multicast session that the second request message requests to establish.

It may be understood that the second response message may be the foregoing MBMS bearer activation response message. For detailed descriptions, refer to related descriptions in S303. This is not limited herein.

With reference to the method embodiments, the foregoing describes a procedure of the communication method provided in embodiments of this application. For ease of understanding, procedures of the foregoing method in various scenarios are described below in detail by using several examples of the scenarios.

Scenario 1: A core network element is a BM-SC, and one BM-SC may control a plurality of GCS ASs. An example in which a BM-SC #1 controls a GCS AS #1, a GCS A #2, and a GCS AS #3 is used. Detailed descriptions are provided below.

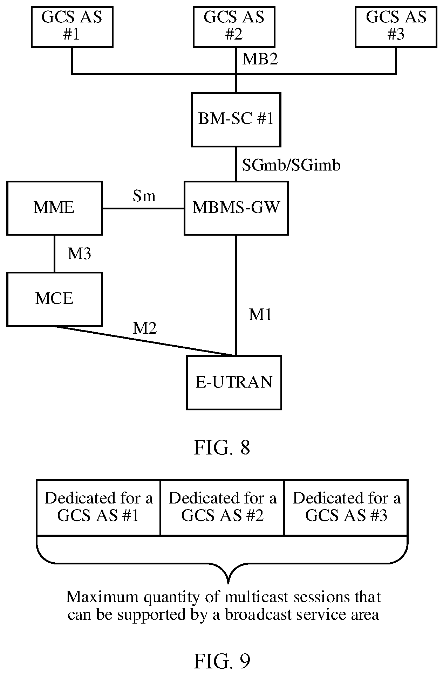

As shown in FIG. 8, before the GCS AS #1, the GCS AS #2, and the GCS AS #3 initiate services:
(1) The BM-SC #1 separately configures identifiers corresponding to the GCS AS1, the GCS AS #2, and the GCS AS #3.

The identifier of the GCS AS #1 may be the foregoing first identifier. Similarly, the identifier of the GCS AS #2 may be a second identifier, and the identifier of the GCS AS3 may be a third identifier. The first identifier may be an IP of the GCS AS #1 or a government department identifier corresponding to the GCS AS #1. The second identifier may be an IP of the GCS AS #2 or a government department identifier corresponding to the GCS AS #2. The third identifier may be an IP of the GCS AS #3 or a government department identifier corresponding to the GCS AS #3. This is not limited herein.

In this case, the BM-SC #1 separately configures identifiers corresponding to the first identifier, the second identifier, and the third identifier. For example, the BM-SC #1 separately configures an identifier #a corresponding to the first identifier, an identifier #b corresponding to the second identifier, and an identifier #c corresponding to the third identifier.

(2) The BM-SC #1 configures a broadcast service area shared by the GCS AS #1, and the GCS AS #2 and the GCS AS #3. The broadcast service area includes a plurality of cells. For detailed descriptions of the broadcast service area, refer to related descriptions in S301. Details are not described again.

(3) As shown in FIG. 9, the BM-SC #1 allocates respective quantities of dedicated multicast sessions in the broadcast service areas to the GCS AS #1, the GCS AS #2, and the GCS AS #3, that is, a maximum quantity of multicast sessions that can be activated by each of the GCS AS #1, the GCS AS #2, and the GCS AS #3. It may be understood that a sum of the respective quantities of dedicated multicast sessions corresponding to the GCS AS #1, the GCS AS #2, and the GCS AS #3 is a maximum quantity of multicast sessions that can be supported by the broadcast service area.

After the BM-SC #1 completes the configurations, the GCS AS #1, the GCS AS #2, and the GCS AS #3 initiate service requirements. A specific procedure is as follows:
(1) When having service requirements, the GCS AS #1, the GCS AS #2, and the GCS AS #3 may send, to the BM-SC #1, MBMS bearer activation request messages that carry the respective identifiers.
(2) The BM-SC #1 may control, based on the identifiers carried in the GCS AS #1, the GCS AS #2, and the GCS AS #3 and the quantities of dedicated multicast sessions that are pre-allocated to the GCS AS #1, the GCS AS #2, and the GCS AS #3, quantities of multicast sessions established by the GCS AS #1, the GCS AS #2, and the GCS AS #3 not to exceed the respective quantities of dedicated multicast sessions.

It may be understood that an MB2 interface may include MB2-C and MB2-U. For an implementation principle of establishing a multicast session, refer to related descriptions in S301 to S303. Details are not described again.

Scenario 2: A core network element is a BM-SC, and one BM-SC controls one GCS AS. An example in which a BM-SC #2 controls a GCS AS #4, a BM-SC #3 controls a GCS AS #5, and a BM-SC #4 controls a GCS AS #6 is used. Detailed descriptions are provided below.

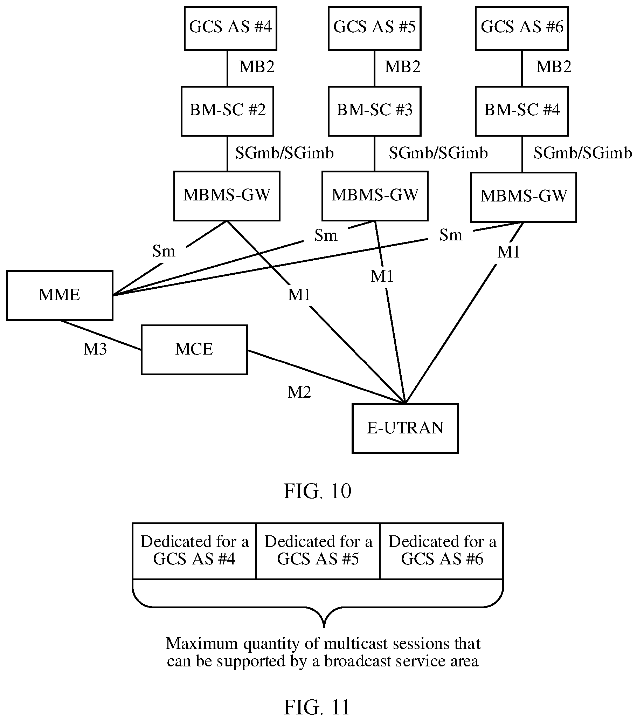

As shown in FIG. 10, before the GCS AS #4, the GCS AS #5, and the GCS AS #6 initiate services:
(1) The BM-SC #2 configures an identifier corresponding to the GCS AS #4, the BM-SC #3 configures an identifier corresponding to the GCS AS #5, and the BM-SC #4 configures an identifier corresponding to the GCS AS #6. The identifier of the GCS AS #4 may be a fourth identifier, the identifier of the GCS AS #5 is a fifth identifier, and the identifier of the GCS AS #6 may be a sixth identifier. The fourth identifier may be an IP of the GCS AS #4 or a government department identifier corresponding to the GCS AS #4. The fifth identifier may be an IP of the GCS AS #5 or a government department identifier corresponding to the GCS AS #5. The sixth identifier may be an IP of the GCS AS #6 or a government department identifier corresponding to the GCS AS #6. This is not limited herein.
   In this case, the BM-SC #2 may configure an identifier corresponding to the fourth identifier, for example, an identifier #d; the BM-SC #3 may configure an identifier corresponding to the fifth identifier, for example, an identifier #e; and the BM-SC #4 may configure an identifier corresponding to the sixth identifier, for example, an identifier #f.
(2) The BM-SC #2, the BM-SC #3, and the BM-SC #4 separately configure a same broadcast service area shared by the GCS AS #4, the GCS AS #5, and the GCS AS #6. For detailed descriptions, refer to related descriptions in the scenario 1. Details are not described again.
(3) As shown in FIG. 11, the BM-SC #2 allocates a respective quantity of dedicated multicast sessions in the broadcast service area to the GCS AS #4, that is, a maximum quantity of multicast sessions that can be activated by the GCS AS #4. The BM-SC #3 allocates a respective quantity of dedicated multicast sessions in the broadcast service area to the GCS AS #5, that is, a maximum quantity of multicast sessions that can be activated by the GCS AS #5. The BM-SC #4 allocates a respective quantity of dedicated multicast sessions in the broadcast service area to the GCS AS #6, that is, a maximum quantity of multicast sessions that can be activated by the GCS AS #6. It may be understood that a sum of the respective quantities of dedicated multicast sessions corresponding to the GCS AS #4, the GCS AS #5, and the GCS AS #6 is a maximum quantity of multicast sessions that can be supported by the broadcast service area.

After the BM-SC #2, BM-SC #3, and BM-SC #4 complete the configurations, the GCS AS #4, the GCS AS #5, and the GCS AS #6 initiate service requirements. A specific procedure is as follows:
(1) When having service requirements, the GCS AS #1, the GCS AS #4, the GCS AS #5, and the GCS AS #6 may send, to the respective BM-SCs corresponding to the GCS AS #1, the GCS AS #4, the GCS AS #5, and the GCS AS #6, MBMS bearer activation request messages that carry the identifiers.
(2) The BM-SC #2, the BM-SC #3, and the BM-SC #4 may control, based on the respective received identifiers and the quantities of dedicated multicast sessions corresponding to the identifiers of the GCS AS #4, the GCS AS #5, and the GCS AS #6, quantities of multicast sessions established by the GCS AS #4, the GCS AS #5, and the GCS AS #6 not to exceed the respective quantities of dedicated multicast sessions.

It may be understood that, for an implementation principle of establishing a multicast session, reference is made to related descriptions in S301 to S303. Details are not described again.

A difference between the scenario 2 and the scenario 1 lies in that, in the scenario 1, one BM-SC #1 controls the quantity of multicast sessions for the GCS AS #1, the GCS AS #2, and the GCS AS #3, while in the scenario 2, the BM-SC #2 controls the quantity of multicast sessions for the GCS AS #4, the BM-SC #3 controls the quantity of multicast sessions for the GCS AS #5, and the BM-SC #4 controls the quantity of multicast sessions for the GCS AS #6.

Scenario 3: A core network element is a BM-SC, and a plurality of GCS ASs may occupy respective quantities of dedicated multicast sessions in one BM-SC and a quantity of shared multicast sessions of the plurality of GCS Ass, and establish multicast sessions. An example in which a BM-SC #5 controls a GCS AS #7, a GCS AS #8, and a GCS AS #9 is used. Detailed descriptions are provided below.

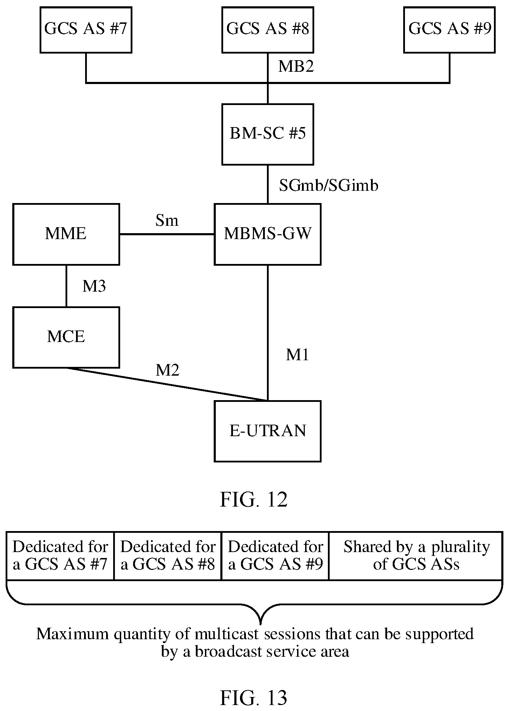

As shown in FIG. 12, before the GCS AS #7, the GCS AS #8, and the GCS AS #9 initiate services:
(1) The BM-SC #5 configures identifiers corresponding to the GCS AS #7, the GCS AS #8, and the GCS AS #9.

The identifier of the GCS AS #7 may be a seventh identifier, the identifier of the GCS AS #8 is an eighth identifier, and the identifier of the GCS AS #9 may be a ninth identifier. The seventh identifier may be an IP of the GCS AS #7 or a government department identifier corresponding to the GCS AS #7. The eighth identifier may be an IP of the GCS AS #8 or a government department identifier corresponding to the GCS AS #8. The ninth identifier may be an IP of the GCS AS #9 or a government department identifier corresponding to the GCS AS #9. This is not limited herein.

In this case, the BM-SC #5 may separately configure identifiers corresponding to the seventh identifier, the eighth identifier, and the ninth identifier. For example, the BM-SC #5 configures an identifier #g corresponding to the seventh identifier, an identifier #h corresponding to the eighth identifier, and an identifier #i corresponding to the ninth identifier. For a specific implementation process, refer to related descriptions in the scenario 1. Details are not described again.

(2) The BM-SC #5 configures a broadcast service area shared by the GCS AS #7, the GCS AS #8, and the GCS AS #9. For detailed descriptions, refer to related descriptions in the scenario 1. Details are not described again.

(3) As shown in FIG. 13, the BM-SC #5 allocates respective quantities of dedicated multicast sessions in the broadcast service area to the GCS AS #7, the GCS AS #8, and the GCS AS #9, that is, a maximum quantity of multicast sessions that can be activated by the GCS AS #7, the GCS AS #8, and the GCS AS #9 respectively, and uses a remaining quantity of multicast sessions as the quantity of shared multicast sessions.

It may be understood that a sum of the respective quantities of dedicated multicast sessions corresponding to the GCS AS #7, the GCS AS #8, and the GCS AS #9 and the quantity of shared dedicated multicast sessions is a maximum quantity of multicast sessions that can be supported by the broadcast service area.

After the BM-SC #5 completes the configurations, the GCS AS #7, the GCS AS #8, and the GCS AS #9 initiate service requirements. A specific procedure is as follows:
(1) When having service requirements, the GCS AS #7, the GCS AS #8, and the GCS AS #9 may send, to the BM-SC #5, MBMS bearer activation request messages that carry the respective identifiers.
(2) The BM-SC #5 may allocate, in a preferential manner based on the identifiers of the GCS AS #7, the GCS AS #8, and the GCS AS #9 and the quantities of dedicated multicast sessions corresponding to the identifiers of the GCS AS #5, the GCS AS #6, and the GCS AS #7, the quantity of dedicated multicast sessions of the GCS AS #7 to the GCS AS #7, the quantity of dedicated multicast sessions of the GCS AS #8 to the GCS AS #8, and the quantity of dedicated multicast sessions of the GCS AS #9 to the GCS AS #9, to establish multicast sessions.
(3) If the quantities of dedicated multicast sessions of at least one of the GCS AS #7, the GCS AS #8, and the GCS AS #9 are fully occupied, for example, the quantity of dedicated multicast sessions of the GCS AS #7 is fully occupied, and the GCS AS #7 has a new service requirement, if there is a quantity of unoccupied multicast sessions in the quantity of shared multicast sessions, the GCS AS #7 may occupy the quantity of unoccupied multicast sessions in the quantity of shared multicast sessions, and establish a multicast session, to meet the new service requirement. If there is no quantity of unoccupied multicast sessions in the quantity of shared multicast sessions, the BM-SC #5 rejects to establish a multicast session for the GCS AS #7, in other words, the GCS AS #7 fails to activate a multicast session.

It may be understood that, for an implementation principle of establishing a multicast session, reference is made to related descriptions in S301 to S303. Details are not described again.

To prevent service interruption or disconnection caused by preemption of a quantity of multicast sessions occupied in an established multicast session, the quantity of dedicated multicast sessions of each GCS AS and a quantity of multicast sessions that have been occupied by another AS in the quantity of shared multicast sessions cannot be preempted by another GCS AS. This improves reliability of a broadcast/multicast session and improves service stability and continuity.

After the multicast session established by the GCS AS by occupying the quantity of multicast sessions in the quantity of shared multicast sessions is released, the quantity of multicast sessions occupied in the released multicast session may be applied for use by another GCS AS.

An MBMS-GW and an MME may implement a control function of any BM-SC in the foregoing scenarios 1 to 3. To be specific, an MBMS-GW and an MME may alternatively control each GCS AS to occupy the quantity of dedicated multicast sessions of the GCS AS and/or the quantity of shared multicast sessions, and establish a multicast session. There may be one or more MBMS-GWs and MMEs, and this is not limited. An MCE may implement a control function of the BM-SC in the foregoing scenarios 1 and 3. It may be understood that, if the MCE is a centralized MCE, there is one MCE; or if the MCE is a distributed MCE, each E-UTRAN has one built-in MCE, and configurations of all MCEs in a same broadcast service area need to be consistent. In other words, a same quantity of dedicated multicast sessions is allocated by each MCE to a plurality of GCS ASs and/or the plurality of GCS ASs share a same quantity of multicast sessions.

One MCE controls the plurality of GCS ASs to occupy the respective quantities of dedicated multicast sessions and the quantity of shared multicast sessions, and establish the multicast sessions, and there is one MCE.

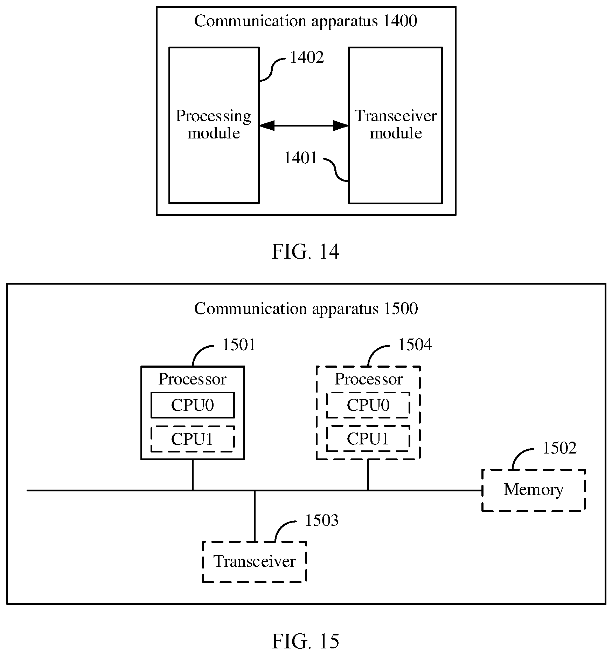

It may be understood that, for an implementation principle of establishing a multicast session, reference is made to related descriptions in S301 to S303. Details are not described again. The foregoing describes in detail the communication method provided in embodiments of this application with reference to FIG. 7 to FIG. 13. A communication apparatus configured to perform the communication method provided in embodiments of this application is described below in detail with reference to FIG. 14 and FIG. 15.

For example, FIG. 14 is a diagram of a first structure of a communication apparatus according to an embodiment of this application. As shown in FIG. 14, the communication apparatus 1400 includes a transceiver module 1401 and a processing module 1402. For ease of description, FIG. 14 shows only main parts of the communication apparatus.

In some embodiments, the communication apparatus 1400 is applicable to the communication system shown in FIG. 6, and performs a function of the foregoing core network element.

The transceiver module 1401 is configured to receive a first request message from a first application server. The processing module 1402 is configured to: if a quantity of unoccupied multicast sessions in a quantity of dedicated multicast sessions of the first application server is greater than or equal to a quantity of multicast sessions that the first request message requests to establish, based on the first request message, occupy the quantity of unoccupied multicast sessions, and establish a first multicast session for the first application server. The first request message is for requesting to establish a multicast session for the first application server. The quantity of dedicated multicast sessions is a quantity of multicast sessions that are allowed to be occupied by the first application server to establish a multicast session and that are not allowed to be occupied by an application server other than the first application server to establish a multicast session. The quantity of unoccupied multicast sessions is a quantity of multicast sessions other than a quantity of occupied multicast sessions in the quantity of dedicated multicast sessions. The quantity of occupied multicast sessions is a quantity of multicast sessions occupied in a multicast session already established for the first application server.

Optionally, the transceiver module 1401 is further configured to: based on the first request message, after occupying the quantity of unoccupied multicast sessions, and establishing the first multicast session for the first application server, send a first response message to the first application service. The first response message indicates that a core network element has established the first multicast session for the first application server.

Optionally, the transceiver module 1401 is further configured to: based on the first request message, after the core network element occupies the quantity of unoccupied multicast sessions, and establishes the first multicast session for the first application server, reduce the quantity of unoccupied multicast sessions from a first quantity to a second quantity. The first quantity is the quantity of unoccupied multicast sessions in the quantity of dedicated multicast sessions before the first multicast session is established, and the second quantity is a quantity of unoccupied multicast sessions in the quantity of dedicated multicast sessions after the first multicast session is established.

Optionally, the transceiver module 1401 is further configured to receive a second request message from the first application server. The processing module 1402 is further configured to: if the second quantity is less than a quantity of multicast sessions that the second request message requests to establish, reject, based on the second request message, to establish the multicast session for the first application server; or based on the second request message, occupy the quantity of occupied multicast sessions, and establish a second multicast session for the first application server.

Further, the processing module 1402 is configured to: release, based on the second request message, a third multicast session in a multicast session already established for the first application server, to increase the quantity of unoccupied multicast sessions from the second quantity to a third quantity; and if the third quantity is greater than or equal to the quantity of multicast sessions that the second request message requests to establish, occupy the quantity of unoccupied multicast sessions, and establish the second multicast session for the first application server.

Optionally, the processing module 1402 is further configured to release the third multicast session by determining that a priority of the multicast session that the second request message requests to establish for the first application server is higher than a priority of the third multicast session.

Optionally, the transceiver module 1401 is further configured to receive a second request message from the first application server. The processing module 1402 is configured to: if the quantity of unoccupied multicast sessions in the quantity of dedicated multicast sessions is less than a quantity of multicast sessions that the second request message requests to establish, and a quantity of unoccupied multicast sessions in a quantity of shared multicast sessions is greater than or equal to the quantity of multicast sessions that the second request message requests to establish, based on the second request message, occupy the quantity of unoccupied multicast sessions in the quantity of shared multicast sessions, and establish a second multicast session for the first application server. The second request message is for requesting to establish a multicast session for the first application server. The quantity of shared multicast sessions is a quantity of multicast sessions that are allowed to be occupied by a plurality of application servers to establish multicast sessions. The plurality of application servers include the first application server. The quantity of unoccupied multicast sessions in the quantity of shared multicast sessions is a quantity of multicast sessions, in the quantity of shared multicast sessions, other than a quantity of occupied multicast sessions in the quantity of shared multicast sessions. The quantity of occupied multicast sessions in the quantity of shared multicast sessions is a quantity of multicast sessions occupied in a multicast session already established for at least a part of the plurality of application servers.

Optionally, the transceiver module 1401 is further configured to receive a second request message from the first application server. The processing module 1402 is configured to: if the quantity of unoccupied multicast sessions in the quantity of dedicated multicast sessions is less than the quantity of multicast sessions that the first request message requests to establish, and a quantity of unoccupied multicast sessions in a quantity of shared multicast sessions is less than a quantity of multicast sessions that the second request message requests to establish, reject, based on the second request message, to establish the multicast session for the first application server. The second request message is for requesting to establish a multicast session for the first application server.

In a possible design solution, the core network element is at least one or more of the following: a broadcast/multicast service center BM-SC, a multimedia broadcast/multicast service gateway MBMS-GW, a mobility management entity MME, or a multi-cell/multicast coordination entity MCE.

Optionally, the transceiver module 1401 may include a sending module (not shown in FIG. 14) and a receiving module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module (not shown in FIG. 14). The storage module stores a program or instructions. When the processing module 1402 executes the program or the instructions, the communication apparatus 1400 is enabled to perform a function of the core network element in the foregoing communication method.

It may be understood that the communication apparatus according to the third aspect may be a core network element, or may be a chip (system) or another part or component that may be disposed in the core network element, or may be an apparatus including the core network element. This is not limited in this application.

In addition, for technical effects of the communication apparatus 1400, refer to technical effects of the foregoing communication method. Details are not described herein again.

In some other embodiments, the communication apparatus 1400 is applicable to the communication system shown in FIG. 6, and performs a function of the foregoing application server.

The processing module 1402 is configured to: obtain a first identifier when a multicast session needs to be established. The transceiver module 1401 is configured to send, to a core network element, a first request message that carries a first identifier. The first identifier identifies the communication apparatus 1400 in a plurality of application servers. The first request message is for requesting the core network element to establish, based on the first identifier, a multicast session for the communication apparatus 1400 in the plurality of application servers.

Optionally, the transceiver module 1401 is further configured to: after sending, to the core network element, the first request message that carries the first identifier, receive a first response message from the core network element. The first response message indicates that the core network element has established a first multicast session for the communication apparatus 1400.

Optionally, the transceiver module 1401 is further configured to: after sending, to the core network element, the first request message that carries the first identifier, receive a first response message from the core network element. The first response message indicates that the core network element has established a first multicast session for the communication apparatus 1400.

Optionally, the transceiver module 1401 is further configured to: after sending, to the core network element, the first request message that carries the first identifier, send, to the core network element, a second request message that carries the first identifier. The second request message is for requesting the core network element to establish, based on the first identifier, a multicast session for the communication apparatus 1400 in the plurality of application servers.

The transceiver module 1401 is further configured to: after the communication apparatus 1400 sends, to the core network element, the second request message that carries the first identifier, receive a second response message from the core network element. The second response message indicates that the core network element has established a second multicast session for the communication apparatus 1400, or the second response message indicates that the core network element rejects to establish, for the communication apparatus 1400, the multicast session that the second request message requests to establish.

In a possible design solution, the core network element is at least one or more of the following: a broadcast/multicast service center BM-SC, a multimedia broadcast/multicast service gateway MBMS-GW, a mobility management entity MME, or a multi-cell/multicast coordination entity MCE.

Optionally, the transceiver module 1401 may include a sending module (not shown in FIG. 14) and a receiving module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module (not shown in FIG. 14). The storage module stores a program or instructions. When the processing module 1402 executes the program or the instructions, the communication apparatus 1400 is enabled to perform a function of the application server in the communication method shown in FIG. 7.

It may be understood that the communication apparatus according to the fourth aspect may be a network device, for example, the first application server, or may be a chip (system) or another part or component that may be disposed in the network device, or may be an apparatus including the network device. This is not limited in this application.

In addition, for technical effects of the communication apparatus 1400, refer to technical effects of the communication method shown in FIG. 7. Details are not described herein again.

For example, FIG. 15 is a diagram of a second structure of a communication apparatus according to an embodiment of this application. For example, the communication apparatus may be a terminal, or may be a chip (system) or another part or component that may be disposed in a terminal. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503. For example, the processor 1501 may be connected to the memory 1502 and the transceiver 1503 through a communication bus.

The parts of the communication apparatus 1500 are described below in detail with reference to FIG. 15.

The processor 1501 is a control center of the communication apparatus 1500, and may be one processor, or may be a general term of a plurality of processing elements. For example, the processor 1501 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

Optionally, the processor 1501 may perform various functions of the communication apparatus 1500 by running or executing a software program stored in the memory 1502 and invoking data stored in the memory 1502, for example, perform the communication method shown in the foregoing 3.

During specific implementation, in an embodiment, the processor 1501 may include one or more CPUs, for example, a CPU0 and a CPU1 shown in FIG. 15.

During specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for performing the solutions in this application, and the processor 1501 controls execution of the software program. For a specific implementation, refer to the foregoing method embodiments. Details are not described herein again.

Optionally, the memory 1502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory 1502 may be integrated with the processor 1501, or may exist independently, and is coupled to the processor 1501 through an interface circuit (not shown in FIG. 15) of the communication apparatus 1500. This is not specifically limited in this embodiment of this application.

The transceiver 1503 is configured to communicate with another communication apparatus. For example, the communication apparatus 1500 is a terminal, and the transceiver 1503 may be configured to communicate with a network apparatus or communicate with another terminal device. For another example, the communication apparatus 1500 is a network apparatus, and the transceiver 1503 may be configured to communicate with a terminal or communicate with another network apparatus.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 through an interface circuit (not shown in FIG. 15) of the communication apparatus 1500. This is not specifically limited in this embodiment of this application.

It may be understood that the structure of the communication apparatus 1500 shown in FIG. 15 does not constitute a limitation on the communication apparatus. An actual communication apparatus may include more or fewer parts than those shown in the figure, or some parts may be combined, or different part deployment may be used.

In addition, for technical effects of the communication apparatus 1500, refer to technical effects of the communication method in the foregoing method embodiments. Details are not described herein again.

An embodiment of this application provides a communication system. The communication system includes one or more terminals shown in FIG. 3.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative descriptions, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instruction or computer program is loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, or may indicate an "and/or" relationship. A specific meaning depends on the context.

In this application, "at least one" means one or more, and "plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithms may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such implementation goes beyond the scope of this application.

It may be clearly understood by a person skilled in the art that, for convenience and conciseness of description, for detailed working processes of the foregoing systems, apparatuses and units, reference may be made to the corresponding processes in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and another division may be used during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or some of the technical solutions may be implemented in a form of a software product. The computer software product is stored in a storage medium, and includes several instructions for instructing a computer device (which may be a personal computer, a server, a network apparatus, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a core network element, a first request message from a first application server, wherein the first request message is for requesting to establish a multicast session for the first application server; and
if a quantity of unoccupied multicast sessions in a quantity of dedicated multicast sessions of the first application server is greater than or equal to a quantity of multicast sessions that the first request message requests to establish, based on the first request message, occupying, by the core network element, the quantity of unoccupied multicast sessions, and establishing a first multicast session for the first application server, wherein
the quantity of dedicated multicast sessions is a quantity of multicast sessions that are allowed to be occupied by the first application server to establish a multicast session and that are not allowed to be occupied by an application server other than the first application server to establish a multicast session, the quantity of unoccupied multicast sessions is a quantity of multicast sessions other than a quantity of occupied multicast sessions in the quantity of dedicated multicast sessions, and the quantity of occupied multicast sessions is a quantity of multicast sessions occupied in a multicast session already established for the first application server.

2. The method according to claim 1, wherein based on the first request message, after the occupying, by the core network element, the quantity of unoccupied multicast sessions, and establishing a first multicast session for the first application server, the method further comprises:
sending, by the core network element, a first response message to the first application service, wherein the first response message indicates that the core network element has established the first multicast session for the first application server.

3. The method according to claim 1, wherein based on the first request message, after the occupying, by the core network element, the quantity of unoccupied multicast sessions, and establishing a first multicast session for the first application server, the method further comprises:
reducing, by the core network element, the quantity of unoccupied multicast sessions from a first quantity to a second quantity, wherein the first quantity is the quantity of unoccupied multicast sessions in the quantity of dedicated multicast sessions before the first multicast session is established, and the second quantity is a quantity of unoccupied multicast sessions in the quantity of dedicated multicast sessions after the first multicast session is established.

4. The method according to claim 3, wherein the method further comprises:
receiving, by the core network element, a second request message from the first application server, wherein the second request message is for requesting to establish a multicast session for the first application server; and
if the second quantity is less than a quantity of multicast sessions that the second request message requests to establish, rejecting, by the core network element based on the second request message, to establish the multicast session for the first application server; or based on the second request message, occupying, by the core network element, the quantity of occupied multicast sessions, and establishing a second multicast session for the first application server.

5. The method according to claim 4, wherein based on the second request message, the occupying, by the core network element, the quantity of occupied multicast sessions, and establishing a second multicast session for the first application server comprises:
releasing, by the core network element based on the second request message, a third multicast session in a multicast session already established for the first application server, to increase the quantity of unoccupied multicast sessions from the second quantity to a third quantity; and
if the third quantity is greater than or equal to the quantity of multicast sessions that the second request message requests to establish, occupying, by the core network element, the quantity of unoccupied multicast sessions, and establishing the second multicast session for the first application server.

6. The method according to claim 5, wherein the releasing, by the core network element based on the second request message, a third multicast session in a multicast session already established for the first application server comprises:
releasing, by the core network element, the third multicast session by determining that a priority of the multicast session that the second request message requests to establish for the first application server is higher than a priority of the third multicast session.

7. The method according to claim 1, wherein the method further comprises:
receiving, by the core network element, a second request message from the first application server, wherein the second request message is for requesting to establish a multicast session for the first application server; and
if the quantity of unoccupied multicast sessions in the quantity of dedicated multicast sessions of the first application server is less than a quantity of multicast sessions that the second request message requests to establish, and a quantity of unoccupied multicast sessions in a quantity of shared multicast sessions is greater than or equal to the quantity of multicast sessions that the second request message requests to establish, based on the second request message, occupying, by the core network element, the quantity of unoccupied multicast sessions in the quantity of shared multicast sessions, and establishing a second multicast session for the first application server, wherein the quantity of shared multicast sessions is a quantity of multicast sessions that are allowed to be occupied by a plurality of application servers to establish multicast sessions, the plurality of application servers comprise the first application server, the quantity of unoccupied multicast sessions in the quantity of shared multicast sessions is a quantity of multicast sessions, in the quantity of shared multicast sessions, other than a quantity of occupied multicast sessions in the quantity of shared multicast sessions, and the quantity of occupied multicast sessions in the quantity of shared multicast sessions is a quantity of multicast sessions occupied in a multicast session already established for at least a part of the plurality of application servers.

8. The method according to claim 1, wherein the method further comprises:
receiving, by the core network element, a second request message from the first application server, wherein the second request message is for requesting to establish a multicast session for the first application server; and
if the quantity of unoccupied multicast sessions in the quantity of dedicated multicast sessions is less than the quantity of multicast sessions that the first request message requests to establish, and a quantity of unoccupied multicast sessions in a quantity of shared multicast sessions is less than a quantity of multicast sessions that the second request message requests to establish, rejecting, by the core network element based on the second request message, to establish the multicast session for the first application server.

9. The method according to any one of claims 1 to 8, wherein the core network element is at least one or more of the following: a broadcast/multicast service center BM-SC, a multimedia broadcast/multicast service gateway MBMS-GW, a mobility management entity MME, or a multicell/multicast coordination entity MCE.

10. A communication method, comprising:
obtaining, by a first application server, a first identifier when a multicast session needs to be established, wherein the first identifier identifies the first application server in a plurality of application servers; and
sending, by the first application server to a core network element, a first request message that carries the first identifier, wherein the first request message is for requesting the core network element to establish, based on the first identifier, a multicast session for the first application server in the plurality of application servers.

11. The method according to claim 10, wherein after the sending, by the first application server to a core network element, a first request message that carries the first identifier, the method further comprises:
receiving, by the first application server, a first response message from the core network element, wherein the first response message indicates that the core network element has established a first multicast session for the first application server.

12. The method according to claim 10 or 11, wherein after the sending, by the first application server to a core network element, a first request message that carries the first identifier, the method further comprises:
sending, by the first application server to the core network element, a second request message that carries the first identifier, wherein the second request message is for requesting the core network element to establish, based on the first identifier, a multicast session for the first application server in the plurality of application servers.

13. The method according to claim 12, wherein after the sending, by the first application server to the core network element, a second request message that carries the first identifier, the method further comprises:
receiving, by the first application server, a second response message from the core network element, wherein the second response message indicates that the core network element has established a second multicast session for the first application server, or the second response message indicates that the core network element rejects to establish, for the first application server, the multicast session that the second request message requests to establish.

14. The method according to any one of claims 10 to 13, wherein the core network element is at least one or more of the following: a broadcast/multicast service center BM-SC, a multimedia broadcast/multicast service gateway MBMS-GW, a mobility management entity MME, or a multicell/multicast coordination entity MCE.

15. A communication apparatus, wherein the apparatus comprises one or more modules configured to perform the method according to any one of claims 1 to 9.

16. A communication apparatus, wherein the communication apparatus comprises a processor and a memory, the memory is configured to store computer instructions, and when the processor executes the instructions, the communication apparatus is enabled to perform the communication method according to any one of claims 1 to 9.

17. A communication apparatus, wherein the apparatus comprises one or more modules configured to perform the method according to any one of claims 10 to 14.

18. A communication apparatus, wherein the communication apparatus comprises a processor and a memory, the memory is configured to store computer instructions, and when the processor executes the instructions, the communication apparatus is enabled to perform the communication method according to any one of claims 10 to 14.

19. A communication system, comprising the communication apparatus according to claim 15 or 16 and the communication apparatus according to claim 17 or 18.

20. A computer-readable storage medium, wherein the computer-readable storage medium comprises a computer program or instructions, and when the computer program or the instructions are run on a computer, the computer is enabled to perform the communication method according to any one of claims 1 to 14.

21. A computer program product, wherein the computer program product comprises a computer program or instructions, and when the computer program or the instructions are run on a computer, the computer is enabled to perform the communication method according to any one of claims 1 to 14.
